# EUROPEAN PATENT SPECIFICATION

(11) **EP 2 651 845 B1**
(45) Date of publication and mention of the grant of the patent: **02.08.2017**
(21) Application number: 11849349.3
(22) Date of filing: 24.11.2011
(51) Int. Cl.: C04B 2/02, C04B 2/08, C01F 11/02, C01F 11/16, B02C 13/22, B02C 13/286, B02C 23/18, C04B 2/04

(54) **APPARATUS FOR THE PREPARATION OF FINELY DIVIDED CALCIUM HYDROXIDE**
VORRICHTUNG ZUR HERSTELLUNG VON FEIN GETEILTEM CALCIUMHYDROXID
APPAREIL POUR LA PRÉPARATION D'HYDROXYDE DE CALCIUM FINEMENT DIVISÉ

(30) Priority: 13.12.2010 FI 20100417
(43) Date of publication of application: 23.10.2013
(73) Proprietor: Fractivator OY, 33880 Lempäälä (FI)
(72) Inventor: PALM, Carl-Olof, FI-20100 Turku (FI)
(74) Representative: Kolster Oy Ab
(86) International application number: PCT/FI2011/051036
(87) International publication number: WO 2012/080565

(56) References cited:
- WO-A1-99/51524
- WO-A1-2006/040391
- WO-A1-2010/055199
- WO-A1-2011/154610

## Description

The present invention relates to an apparatus according to claim 1 for preparation of finely divided calcium hydroxide.

### BACKGROUND

Slaking of burnt lime, i.e. the reaction between burnt lime (calcium oxide) with water, has typically been performed in cisterns by slowly rotating kneaders, wherein water and burnt lime are added slowly in small amounts. Slaking of lime releases considerable amounts of heat. By this method the particle size of the slaked lime, i.e. calcium hydroxide, prepared is typically 5...10 microns.

If one desires to use slaked lime for the preparation of finely divided precipitated calcium carbonate, i.e. PCC, for example for use in paper industry, it is important that the particle size of calcium hydroxide is small, typically in the nano-range, for example 50...500 nm. Additionally it is very important that the PCC prepared is very pure and that it does not contain components decreasing the quality of the end product or impurities that may cause troubles in the paper making process.

The Finnish patent FI 103964 discloses a method where calcium oxide and an excess of water are led into an impact disintegrator operating according to the impact mill principle. The material discharged from the impact disintegrator, namely a water suspension containing calcium hydroxide, is allowed to settle in a cistern, typically for several tens of minutes. The precipitated portion comprises oversized particles derived from over-burnt calcium oxide. Additionally, oversized particles are impurities, especially sand and silicates. All these oversized particles are returned to the impact disintegrator where they are comminuted again. The precipitated material can be returned several times to the impact disintegrator until the material is throughout comminuted enough. Because an excess of water has been fed into the impact disintegrator, the comminuting of the calcium oxide material is weakened due to the dampening effect of the water. Also for this reason the material should be returned to the impact disintegrator.

By the method described above a material with a small particle size is achieved. A problem is, however, in that the impurities (sand and silicates), which are harder than calcium oxide, also finally are comminuted into small particles due to the repeated return of the precipitated material into the impact disintegrator. Thus the end product, the calcium hydroxide, will comprise these impurities. Irrespective of the intended use of the calcium hydroxide prepared, these impurities cause damages in pumps and other process equipments. Especially when aimed for preparation of PCC for use in paper industry, this is particularly problematic because silicates and sand cause easily damages to the paper calenders.

The Finnish patent FI 120733 discloses an improved method for the preparation of finely divided calcium hydroxide. Calcium oxide is comminuted in an impact disintegrator into which in addition to the calcium oxide a small amount of water is led to wet the particles obtained and to bind the dust. The calcium oxide powder is led to a conveyor being in connection with the impact disintegrator and operating as a pre-slaking apparatus, to which conveyer water is added, preferably about 1/3 of the required amount of water, and where the reacting material is subjected to a kneading effect. The material which is a mixture of calcium oxide and calcium hydroxide is led from the conveyor to a cistern operating as post-slaking apparatus, to which cistern the remaining portion of the total water amount required for slaking is added, preferably about 2/3 of the total amount of water required for slaking.

FI 120733 represents a considerable improvement over existing known technique at that time. However, the technique disclosed therein suffers from certain disadvantages:
1. The slaking reaction is still mainly performed in a big cistern, where the reaction lasts relatively long (at least about 4 min), and where the calcium hydroxide particles formed already have time to grow.
2. The initial slaking, which is performed in the screw conveyor, was very incomplete, and it is performed at a relatively low temperature.
3. Further processing of the reaction product, i.e. calcium hydroxide, obtained by the slaking, into nano-sized particles, purification and storing is not disclosed.

### OBJECTS AND SUMMARY OF THE INVENTION

An object of the present invention is an apparatus permitting a more effective method for preparation of finely divided calcium hydroxide, where the reaction is performed as completely as possible and approximately to the end in a very short time, i.e. < 1 min., typically in 30 seconds.

Particularly, an object is to achieve a process and a product, which are steady and not dependent on possible fluctuations in the starting material (burnt lime).

An object is also to achieve a process, where the calcium hydroxide obtained in the slaking step is brought into fine particles, even into nano-sized particles.

An object is also to achieve a process where solid, finely divided calcium hydroxide is easy to purify from impurities and heavy particles.

An object is also to obtain a finely divided calcium hydroxide which is pure enough for use in foodstuff.

An object is also to obtain a process, where the fraction containing impurities and heavy particles and which is separated from the finely divided reaction product can be used for separation of byproducts.

An object is to achieve a process easy to control and automate.

Now it has surprisingly been found that disintegrating the burnt lime, i.e. calcium oxide into fine particles in an impact disintegrator and subsequently performing the reaction of the finely disintegrated calcium oxide with water in a screw conveyor located after the impact disintegrator, calcium hydroxide is obtained in a very rapid reaction, which is easy to control and which gives a reaction product (calcium hydroxide), which, if desired, is easy to bring into a very small particle size, even nano-size, and which is very pure.

The invention concerns an apparatus useful for the preparation of calcium hydroxide, wherein calcium oxide is reacted with water to calcium hydroxide, where the apparatus comprises
- an impact disintegrator operating according to the principle of an impact mill, and
- a screw conveyor being in connection with the impact disintegrator.

The invention is characterized in that the apparatus further comprises
- devices for dispensing the water required to the impact disintegrator and screw conveyor,
- devices to follow-up the temperature of the material in the screw conveyor, particularly in the last part of the conveyor, and
the volume of the screw conveyor is arranged to increase towards the discharge end.

### BRIEF DESCRIPTION OF THE DRAWINGS

Figure 1 shows in one embodiment an apparatus for the preparation of finely divided calcium hydroxide.
Figure 2 shows the apparatus according to Figure 1, where the control of the process is performed in an alternative way.

### DETAILED DESCRIPTION OF THE INVENTION

The reaction of burnt lime, i.e. CaO with water, is of two kinds:
1. A rapid ion reaction, i.e. CaO → Ca²⁺ + O²⁻
2. A slow covalent reaction (ionization of water), i.e. H₂O → 2H⁺ + O²⁻

According to the Pauling's electro-negativity theory, 71% of CaO reacts according to the rapid ion reaction and 29 % according to the slow covalent reaction. Therefore it was decided to perform the quenching in two steps. Thus the total time required for quenching will become as short as possible. A short quenching time is necessary in order to retain the small size of the calcium hydroxide particles.

The method carried out in the apparatus of the invention is carried out mainly and approximately to the end in the screw conveyor located after the impact disintegrator, wherein the remaining part of the water needed for the reaction is led into the screw conveyor. The water is preferably led into different parts of the screw conveyor. Hereby the progress of the process, the increase of the temperature of the material mixture, due to the progress of the process, and the increase of the concentration of solid matter can be controlled. Because of the addition of water the temperature increases rapidly. The increase of the temperature accelerates the reaction time: for each 10°C increase in temperature the reaction speed doubles. Due to the increase of the temperature and squeezing in the screw conveyor a slight overpressure is created. Preferably, the temperature of the material leaving the screw conveyor is allowed to raise approximately to the vaporization temperature of water at the prevailing pressure, i.e. to 100 °C when the pressure is 1 bar. Correspondingly, if the pressure is 2 bar, the vaporization temperature of water is 120°C, and if the pressure is 0.8 bar, the vaporization temperature of water is 93°C. Preferably, the temperature of the material should be kept approximately at the vaporization temperature (100 °C, 1 bar) for about 10 seconds before the material is discharged from the screw conveyor. By feeding to the impact disintegrator and screw conveyor an amount of water, which corresponds to the amount of calcium oxide fed into the impact disintegrator, and by controlling the temperature of the material discharged from the screw conveyor, one can ensure that the process is practically finalized when the material leaves the screw conveyor. In case the temperature of the material in the screw conveyer tends to rise too high it can be decreased by decreasing the temperature of the water fed. Correspondingly, if the temperature of the material in the screw conveyer tends to drop too low it can be increased by increasing the temperature of the water fed, and/or the temperature of the mixture or mixture solution.

Preferably, the solids content is allowed to rise as high as possible in the screw conveyor, because this ensures that a strong kneading effect on the material is obtained. In the conveyor the kneading effect is achieved on the paste-like material therein by the pushing force of the screw.

Due to the water added and to the increasing temperature, the space needed by the material in the screw conveyor increases substantially, especially towards the discharge end of the screw conveyor. By regulating the speed of the screw conveyor, the increasing space needed by the material can be controlled. In this way it can also be ensured that the apparatus does not become clogged. By regulating the speed of the screw conveyor it can also be ensured that the material remains sufficiently long in the screw conveyor. The volume of the screw conveyor is arranged to increase towards the discharge end of the conveyor. In practice this is best performed so that the screw conveyor is divided into two parts, where the diameter of the latter part is greater that that of the former part. In this way it can be ensured that the apparatus will not become clogged due to the swelling of the material.

If desired, air can be withdrawn from the screw conveyor, preferably from the feeding end thereof, in order to further intensify the process.

The solids content of the reaction product, i.e. calcium hydroxide, leaving the screw conveyor can be adjusted to a desired level, for example to 10 %, by addition of water. If it is desired to further process the reaction product, for example to fine particles such as nanosized particles, it is preferable to homogenize the material, preferably in homogenizing apparatus operating according to the principle of an impact mill, in order to disintegrate various agglomerates. The homogenizing prevents the growth of the particles of the reaction products generated. Before the material flow is led into the homogenizing apparatus, sand and similar heavy particles are preferably removed. Should particles of valuable metals or minerals be present in the material flow, such particles could of course be recovered. The homogenized material suspension is pumped into one or several storage cisterns, where the material suspension is stored for a certain period of time in order to precipitate heavy particles. Then the material suspension is withdrawn from the surface of cisterns and the heavy particles are withdrawn from the bottom of the cisterns. By storing, particles not following the equilibrium of Brownian motion and gravity, are precipitated from the colloid. From the precipitate removed from the bottom by-products can be recovered. After the homogenization, the calcium hydroxide particles are brought into colloidal size, i.e. nanosize, typically 10...500 nm, especially about 50 nm. Such a colloidal mixture is very stable, and thus it can be kept in the storage cistern for 24 h. In this time heavy particles have time enough to settle to the bottom and a very pure colloidal suspension is obtained.

The colloidal solution or suspension recovered can be used directly in a suitable continued reaction. Alternatively, it can be dried or dispersed in a suitable polymer to ensure that the small particles keep separated.

The impact power of the impact disintegrator shall be strong enough to comminute the burnt lime, i.e. the calcium oxide, preferably so strong that also over-burnt calcium oxide is comminuted. If the calcium hydroxide is aimed for example for preparation of PCC, the impact power must not, however, be so strong that also hard impurities such as sand and silicates are comminuted and thus would be allowed to move into the final product.

According to the method a lime milk is obtained where the size of the calcium hydroxide particles is less than 200 nm, typically about 50 nm, and which contains very small amounts of impurities and which may have a solids content of about 10...20 %.

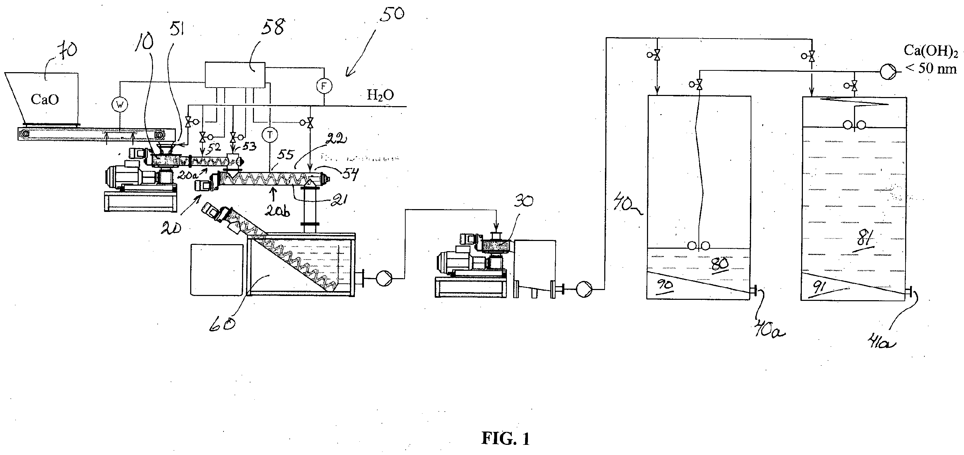

Figure 1 shows in one embodiment an apparatus according to the invention. Into the impact mixer 10 is fed from the cistern 70 calcium oxide, the particle size of which typically varies from 100 mm to dust-like, and which may contain great amounts of impurities such as silicates, sand, humus and iron. The impact mixer is an apparatus operating according the impact mill principle, preferably an apparatus with two rotors rotating in opposite direction. Apparatuses operating according to the impact mill principle are as such well known. They are previously described in a great number of patents, for example in the Finnish patent publications FI 94030 B, FI 105112 B and FI 105699 B and the PCT publication WO 96/18454. The patent FI 117711 also discloses an apparatus operating according to the impact mill principle, where the apparatus is connected to a discharge screw for the material treated in the apparatus. In order to bind dust and to wet the surfaces of the calcium oxide particles obtained and to initiate the slaking reaction, a small amount of water, at most 1/3 of the total amount of water needed, is also fed at the feeding point 51 into the impact mixer. From the impact mixer, the material is led to a screw conveyor 20, which is divided into two parts, 20a and 20b. Into both parts of the screw conveyor water is led, according to the figure in feeding points 52 and 53. The temperature in the screw is measured with the thermometers 55, and the final temperature T is regulated to the target temperature of the slaking process. The screw conveyor 20 operates as slaking apparatus. The screw 21 of the screw conveyor is preferably a so called helix screw, which do not have any central axis. In the end point of the part 20b of the screw conveyor, where the slaking is finished and the solids content thus has increased to a high level, water is added in the feeding point 54 in order to adjust the solids content to a desired level. If it is desired to process this diluted lime milk so that very small, even nanosized calcium hydroxide particles are obtained, the lime milk is fed into the homogenizing apparatus 30, which preferably is an apparatus operating according to the principle of an impact mill. For the removal of sand and other heavy impurities, a purification apparatus 60, aimed for this purpose, is located before the homogenizing apparatus 30. The suspension leaving the homogenizing apparatus, which is a colloidal solution of nanosized calcium hydroxide particles, is fed into the storage cisterns 40 and 41. The colloidal calcium hydroxide solution 80, 81 is allowed to settle for a suitable period of time, preferably for 24 h at most. After settling the colloidal solutions are removed from the surface of the cisterns 80 and 81. The sediments accumulated on the bottom of the cisterns are removed through the bottom valves 40a, 41a.

In the solution shown in figure 1, the temperature in the screw conveyor T, the amounts of water to be led to the various water feeding points, and optionally the temperature of the feeding water are regulated from the control centre 58, to which information on the temperature T in the screw conveyor and also on other parameters, such as the amount W of burnt lime fed into the cistern and the total amount F of water fed. Also other parameters such as the effect of the electrical motors etc. can led to the control centre if so desired.

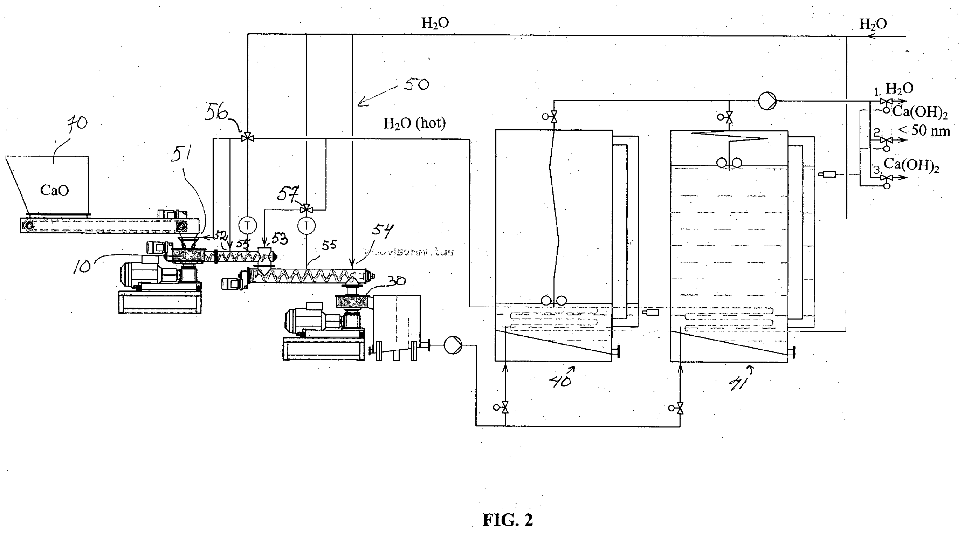

Figure 2 shows the apparatuses according to figure 1 where the control of the process is arranged in a different way. In the solution according to figure 2 the temperature in the parts 20a and 20b of the screw conveyor is regulated by the temperature of the water to be fed so, that hot water (for example process water) is mixed with cold water in the mixing-valves 56 and 57. The valves can be steered by classical P-, P-I-, or P-I-D- regulators.

The invention is illustrated more in detail by the following non-restricting examples.

### Example 1

### Slaking of lime

The experiment was carried out in production scale in an apparatus assembly comprising an impact disintegrator and a screw according to the figures. The impact disintergrator was an apparatus equipped with two rotors and two separate motors, driven by a conic gear as described in the Finnish utility model No. 8661. The first rotor had two rings, ring I and ring III (ring III was the outer ring) and the second rotor had one ring, ring II. The rings were arranged so that ring II became located between rings I and III. The rotors were rotated in opposite directions and the second rotor equipped with ring II was rotated with a higher speed than the first rotor. The diameter of the second part 20b of the screw conveyor was greater than that of the first part 20a so that the cross section area of the second part was about 27% greater then the cross section area of the first part of the screw. Of the total amount of water needed for slaking 1/3 was led into the impact disintegrator to wet the powder and to initiate the reaction. The remaining part was led to the various feeding points on the screw parts 20a and 20b. The temperature was measured in different points along the length of the screw conveyor, and the temperature was kept at its target value by adding water of suitable temperature. In the first part of the screw 70 °C was achieved. In the latter part 20b of the screw nearly 100 °C was achieved, and the temperature was kept there for 10 seconds. The dwell time of the material in the impact disintegrator was < 0.01 s and in the screw conveyor < 30 s, i.e. totally about 30 s.

### Example 2

### The effect of homogenization on the stability of the colloid

The sludge of calcium hydroxide from the screw conveyor (the slaking temperature of which was about 100 °C) was diluted with water to a solids content of 10 %. Precipitation experiments were carried out both from a homogenized and a non-homogenized suspension. The diameter of the sphere-shaped particles in the homogenized suspension was 50 nm on an average. The precipitation was performed in a measuring glass, the volume of which was 1 liter and the height of which was 340 mm. The height of the precipitate accumulated on the bottom was measured as function of time. The following results were obtained:

| **Homogenized** | | **Non-homogenized** | |
|---|---|---|---|
| time/min | height of precipitate/mm | time/min | height of precipitate/mm |
| 0 | 0 | 0 | 0 |
| 15 | 0 | 15 | 10 |
| 60 | 0 | 60 | 42 |
| 120 | 2 | 120 | 90 |
| 240 | 4 | 240 | 127 |
| 300 | 5 | 300 | 134 |
| after 24 h | 21 (7 %) | | 186 (62 %) |

The results show that homogenizing has a significant effect on the stability of the suspension.

### Example 3

### The effect of dilution on the stability of the colloid.

A 10 % suspension of calcium hydroxide milk was diluted to 5 %..

| **Homogenized** | | **Non-homogenized** | |
|---|---|---|---|
| time/min | height of precipitate/mm | time/min | height of precipitate/mm |
| 0 | 0 | 0 | 0 |
| 15 | 7 | 15 | 36 |
| 60 | 50 | 60 | 99 |
| 120 | 68 | 120 | 192 |
| 240 | 90 | 240 | 230 |
| 300 | 98 | 300 | 236 |
| after 24 h | 166 (55 %) | | 270 (90 %) |

The results show that dilution accelerates the precipitation.

### Example 4

### The effect of the slaking temperature on the stability of the colloid

The aim of the experiment was to clarify the effect of the slaking temperature on the stability of the colloid. The lime was slaked at 90 °C while the pressure was 1 bar.

**Results:**

| **Homogenized** | |
|---|---|
| time/min | height of precipitate/mm |
| 0 | 0 |
| 15 | 3 |
| 60 | 14 |
| 120 | 23 |
| 240 | 38 |
| 300 | 47 |
| after 24 h | 116 (39 %) |

The results show that the stability of the colloid decreases when slaking is performed at a lower temperature than the vaporization temperature of water.

The invention is not intended to be limited to the exemplified embodiments presented above. On the contrary, the invention shall be broadly interpreted within the scope of the claims presented below.

## Claims

1. Apparatus useful for the preparation of calcium hydroxide, wherein calcium oxide is reacted with water to give calcium hydroxide, where the apparatus comprises
- an impact disintegrator (10) operating according to the principle of an impact mill, and
- a screw conveyor (20) being in connection with the impact disintegrator (10),
- devices (50) for dispensing the water required to the impact disintegrator (10) and screw conveyor (20),
**characterized in that** the apparatus further comprises
- thermometers (55) to follow-up the temperature of the material in the screw conveyor (20), particularly in the last part (20b) of the conveyor, and that
the volume of the screw conveyor (20) is arranged to increase towards the discharge end (22).

2. The apparatus according to claim 1, **characterized in that** the screw conveyor (20) is divided into two parts (20a, 20b), wherein the diameter of the latter part (20b) is greater that the diameter of the former part (20a).

3. The apparatus according to any of the claims 1-2, **characterized in that** the impact disintegrator (10) is an impact mill equipped with two rotors and two motors, preferably equipped with a gear driven transmission.

4. The apparatus according to any of the claims 1-3, **characterized in that** it comprises a homogenizing apparatus, preferably a homogenizing apparatus operating according to the principle of an impact mill.

5. The apparatus according to claim 4, **characterized in that**
- it comprises one or more storage cistern(s) (40, 41) for storage of the material suspension leaving the homogenization apparatus (30), and that
- it optionally further before the homogenizing apparatus (30) comprises a device (60) for removal of sand and corresponding heavy particles.

## Patentansprüche

1. Vorrichtung, die für die Herstellung von Calciumhydroxid nützlich ist, wobei das Calciumoxid mit Wasser reagiert wird, um Calciumhydroxid zu ergeben, wobei die Vorrichtung Folgendes umfasst
- eine Schlagzerkleinerungsmaschine (10), die dem Prinzip einer Prallmühle entsprechend arbeitet, und
- einen Schneckenförderer (20), der mit der Schlagzerkleinerungsmaschine (10) verbunden ist,
- Vorrichtungen (50) zum Austeilen des Wassers, das für die Schlagzerkleinerungsmaschine (10) und den Schneckenförderer (20) erforderlich ist,
**dadurch gekennzeichnet, dass** die Vorrichtung ferner Folgendes umfasst
- Thermometer (55), um die Temperatur des Materials in dem Schneckenförderer (20), insbesondere im letzten Teil (20b) des Förderers zu überwachen, und dass das Volumen des Schneckenförderers (20) angeordnet ist, um sich auf das Abgabeende (22) zu zu erweitern.

2. Vorrichtung nach Anspruch 1, **dadurch gekennzeichnet, dass** der Schneckenförderer (20) in zwei Teile (20a, 20b) geteilt ist, wobei der Durchmesser des letzteren Teils (20b) größer als der Durchmesser des ersteren Teils (20a) ist.

3. Vorrichtung nach einem der Ansprüche 1 - 2, **dadurch gekennzeichnet, dass** die Schlagzerkleinerungsmaschine (10) eine Prallmühle ist, die mit zwei Rotoren und zwei Motoren ausgestattet ist, bevorzugt mit einem Zahnradgetriebe ausgestattet ist.

4. Vorrichtung nach einem der Ansprüche 1 - 3, **dadurch gekennzeichnet, dass** sie eine Homogenisierungsvorrichtung, bevorzugt eine Homogenisierungsvorrichtung, die den Prinzipien einer Prallmühle entsprechend arbeitet, umfasst.

5. Vorrichtung nach Anspruch 4, **dadurch gekennzeichnet, dass**
- sie einen oder mehrere Speicherbehälter (40, 41) zum Speichern der Materialsuspension umfasst, die die Homogenisierungsvorrichtung (30) verlässt, und dass
- sie wahlweise ferner vor der Homogenisierungsvorrichtung (30) eine Vorrichtung (60) zum Entfernen von Sand und entsprechenden schweren Teilchen umfasst.

## Revendications

1. Appareil utile pour la préparation d'hydroxyde de calcium, dans lequel de l'oxyde de calcium est mis à réagir avec de l'eau pour obtenir de l'hydroxyde de calcium, l'appareil comprenant
- un désintégrateur à impacts (10) fonctionnant selon le principe d'un broyeur à impacts, et
- un convoyeur à vis (20) en liaison avec le désintégrateur à impacts (10),
- des dispositifs (50) pour distribuer l'eau nécessaire au désintégrateur à impacts (10) et au convoyeur à vis (20),
**caractérisé en ce que** l'appareil comporte en outre
- des thermomètres (55) pour suivre la température du matériau dans le convoyeur à vis (20), en particulier dans la dernière partie (20b) du convoyeur, et **en ce que** le volume du convoyeur à vis (20) est prévu pour augmenter vers l'extrémité de décharge (22).

2. Appareil selon la revendication 1, **caractérisé en ce que** le convoyeur à vis (20) est divisé en deux parties (20a, 20b), dans lequel le diamètre de la dernière partie (20b) est supérieure au diamètre de la première partie (20a).

3. Appareil selon la revendication 1 - 2, **caractérisé en ce que** le désintégrateur à impacts (10) est un broyeur à impacts muni de deux rotor et de deux moteurs, de préférence équipé d'une transmission entraînée par engrenage.

4. Appareil selon l'une quelconque des revendications 1 - 3, **caractérisé en ce qu'**il comporte un appareil d'homogénéisation, de préférence un appareil d'homogénéisation fonctionnant selon le principe d'un broyeur à impacts.

5. Appareil selon la revendication 4, **caractérisé en ce que**
- il comprend une ou plusieurs citerne(s) de stockage (40, 41) pour un stockage de la suspension de matériau quittant l'appareil d'homogénéisation (30), et **en ce que**
- il comprend en outre facultativement, avant l'appareil d'homogénéisation (30), un dispositif (60) pour enlever du sable et des particules lourdes correspondantes.
